# EUROPÄISCHE PATENTSCHRIFT

(11) **EP 2 018 490 B1**
(45) Veröffentlichungstag und Bekanntmachung des Hinweises auf die Patenterteilung: **26.02.2020**
(21) Anmeldenummer: 07728926.2
(22) Anmeldetag: 09.05.2007
(51) Int. Cl.: F16D 55/226, F16D 65/092

(54) **SCHEIBENBREMSE MIT SCHUTZBLENDE**
DISK BRAKE WITH GUARD SCREEN
FREIN À DISQUE AVEC GARNITURE DE PROTECTION

(30) Priorität: 12.05.2006 DE 102006022699; 31.05.2006 DE 102006025304
(43) Veröffentlichungstag der Anmeldung: 28.01.2009
(73) Patentinhaber: Continental Teves AG & Co. OHG, 60488 Frankfurt am Main (DE)
(72) Erfinder: HEINZ, Stefan, 65817 Eppstein (DE); SANDER, Christoph, 64390 Erzhausen (DE); BACH, Uwe, 65527 Niedernhausen (DE); SUNDHEIM, Ralf, 60316 Frankfurt (DE); STOKA, Roberto, 65824 Schwalbach (DE)
(86) Internationale Anmeldenummer: PCT/EP2007/054474
(87) Internationale Veröffentlichungsnummer: WO 2007/131922

(56) Entgegenhaltungen:
- EP-A- 1 146 245
- DE-A1- 4 101 514
- DE-A1- 4 106 957
- US-A1- 2005 173 205

## Beschreibung

Die Erfindung betrifft eine Scheibenbremse mit Schutzblende, mit einem fahrzeugfesten Halter, an dem Bremsbeläge und mindestens ein Bremssattel in einer Axialrichtung verschiebbar gelagert sind, wobei der Halter und der Bremssattel mindestens eine Bremsscheibe umgreifen, und wobei der Bremssattel einen Gehäuseschenkel mit mindestens einer Betätigungsvorrichtung, einen weiteren Gehäuseschenkel mit mindestens einem Gehäusefinger, und eine Gehäusebrücke aufweist, mit einer Federanordnung, die eine elastische Vorspannung zwischen Bremssattel und Halter derart erzeugt, dass die Vorspannung im Wesentlichen senkrecht zur einer Verschiebungsrichtung des Bremssattels ausgerichtet ist, und wobei die Federanordnung ein Federelement und eine Schutzblende umfasst. Der Gehäusefinger, das Federelement und die Schutzblende sind derart axial zueinander angeordnet , dass das Federelement zwischen Gehäusefinger und Schutzblende positioniert ist. So fungiert die Schutzblende als Sattelblende und überdeckt in vorteilhafter Weise einen wesentlichen Teil der Federanordnung. Dabei ist die Scheibenbremse besonders gut geschützt, wenn die Sattelblende einen wesentlichen Teil des Bremssattels überdeckt. Im Folgenden soll der Klarheit halber einheitlich der Begriff "Schutzblende" sowohl für eine Applikationsbeschreibung in Gestalt einer Halterblende als auch für eine Applikationsbeschreibung in Gestalt einer Sattelblende definiert bzw. verstanden sein.

Scheibenbremsen an Fahrzeugen werden im Gebrauch aufgrund der Nähe zur Fahrbahn durch zahlreiche Faktoren sehr stark beansprucht und müssen deshalb äußerst robust konzipiert sein. Besonders lose Gegenstände auf der Fahrbahn können empfindliche Schläge auf die einzelnen Bauteile der Bremse verursachen, so dass diese unter Umständen beschädigt oder funktionsuntüchtig wird. Des Weiteren wird es für Kunden zunehmend wichtig, eine optisch formschöne und eine harmonisch und kompakt anmutende Bremse am Fahrzeug verbaut zu wissen. Aus der EP 1 227 260 A2 ist eine Scheibenbremse bekannt, welche eine Federanordnung mit einem Federelement und einer Abdeckung aufweist. Dabei erfüllt die Federanordnung den primären Zweck, den faustseitigen Bremsbelag zu fixieren. Die Abdeckung ist derart mit dem Federelement verbunden, dass diese zur axialen Abstützung der Federanordnung am Bremssattel zweckdienlich ist. Dies impliziert eine ungünstige Ausprägung der Abdeckung.

Es ist eine Aufgabe der Erfindung eine Scheibenbremse anzugeben, welche die Nachteile des Stands der Technik vermeidet und eine verbesserte Alternative bereitstellt, insbesondere durch eine günstige Abdeckung der Bauteile der Scheibenbremse.

Die Aufgabe wird erfindungsgemäß mit den Merkmalen des Kennzeichens des Patentanspruchs 1 gelöst, indem das Federelement an der Schutzblende derart angebracht ist, dass der Kraftfluss der Vorspannung Fᵥ abschnittsweise durch die Schutzblende führt.

Eine vorteilhafte Weiterentwicklung der Erfindung beinhaltet, dass die Federanordnung mittels einer Befestigungsvorrichtung am Bremssattel fixiert ist, da so ein Abstand zwischen Sattelblende und Bremssattel unveränderlich ist, und es nicht zur Kollision zwischen den Bauteilen kommen kann. Dies hat zudem Folge, dass ein Verschleiß der Bremsbeläge nicht zu einer Verschiebung der Schutzblende führt.

In einer weiteren Ausführung der Erfindung ist die Federanordnung mit Befestigungsmitteln am Halter festgelegt, wobei das Federelement mehrstückig aus einem Federstück und einem Trägerelement gebildet sein kann.

Um die Bauteile der Scheibenbremse besonders effektiv und vollständig zu schützen, wird vorgeschlagen, eine Halterblende vorzusehen, die fest mit dem Halter verbunden ist. Der positive Effekt tritt besonders stark zu Tage, wenn die Halterblende im Zusammenwirken mit der Sattelblende als mehrstückige Schutzblende dient und einen wesentlichen Teil der Scheibenbremse überdeckt.

Die Schutzblende kann günstiger Weise entweder als Sattelblende dienen und mit einer Befestigungsvorrichtung am Bremssattel fixiert sein, oder als Halterblende ausgebildet sein und mit Befestigungsmitteln am Halter festgelegt sein. Beide Varianten haben sich als vorteilhaft erwiesen, und dienen dem Schutz und der optischen Harmonisierung der Scheibenbremse. Weiterhin ist es auch denkbar, dass die Halterblende und die Sattelblende in Kombination als Schutzblende fungieren.

In einer weiteren Ausführung der Erfindung ist die Schutzblende der Scheibenbremse aus Kunststoff hergestellt. Die Verwendung von Kunststoff bringt eine hohe Korrosionsbeständigkeit und eine kostengünstige Herstellung der Schutzblende mit sich.

Weiterhin kann das Federelement der Federanordnung zumindest teilweise im Werkstoff der Sattelblende angeordnet sein, wodurch der vom Kunststoff umschlossene Bereich des Federelements versteift wird. Eine Umsetzung ist beispielsweise durch ein einfaches Spritzgussverfahren möglich.

Um die Sattelblende schnell und einfach am Fahrzeug auszutauschen, und den Schutz und das Erscheinungsbild der Bremse zu erneuern, kann das Federelement und die Sattelblende mittels eines formschlüssigen und lösbaren Mechanismus verbunden sein.

Weitere Einzelheiten der Erfindung gehen aus den Zeichnungen anhand der Beschreibung hervor.

In den Zeichnungen zeigt
- Fig. 1: eine perspektivische Ansicht einer Federanordnung mit einer Sattelblende für eine Scheibenbremse,
- Fig. 2: eine Scheibenbremse mit einer montierten Federanordnung gemäß Fig. 1,
- Fig. 3: eine Scheibenbremse nach Fig. 2 mit einer zusätzlichen Halterblende,
- Fig. 4: eine perspektivische Ansicht einer Scheibenbremse mit zwei Bremssätteln mit je einer Sattelblende für die Bremssättel und einer gemeinsamen Halterblende,
- Fig. 5: eine Scheibenbremse mit einem Rahmensattel und einer erfindungsgemäßen Ausführungsform einer Federanordnung mit Sattelblende,
- Fig. 6: die Federanordnung aus Fig. 5,
- Fig. 7: das Federelement der Federanordnung aus Fig. 6,
- Fig. 8: eine weitere Ausgestaltung des Federelements der Federanordnung aus Fig. 6,
- Fig. 9: a) eine weitere Ausführungsform der Federanordnung aus Fig. 5, wobei

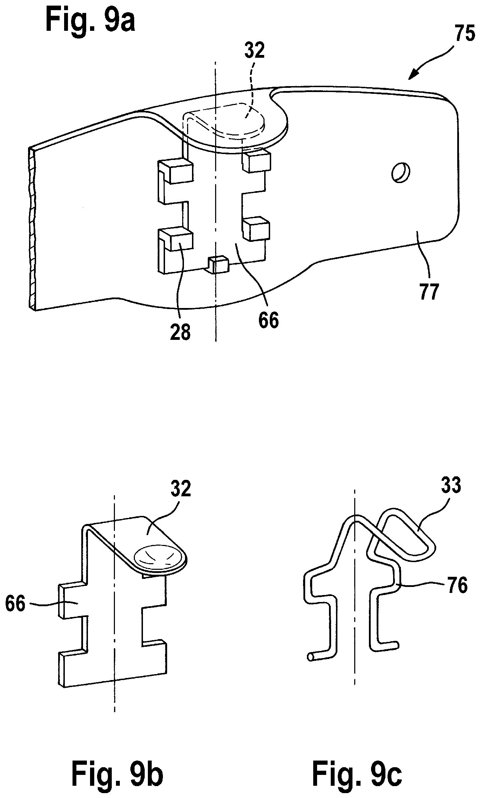

- Fig. 9: b) und c) je eine Ausgestaltung des Federelements anführen,

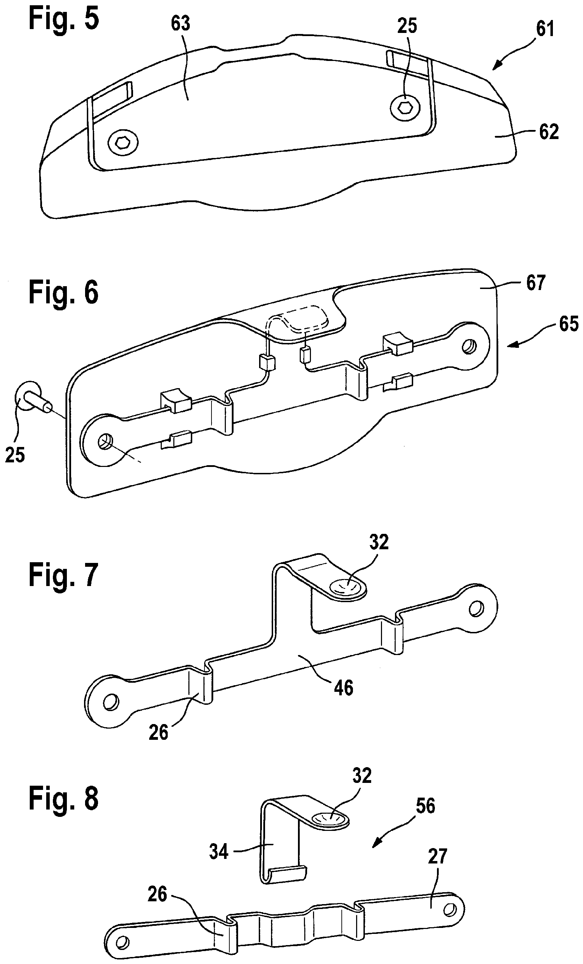

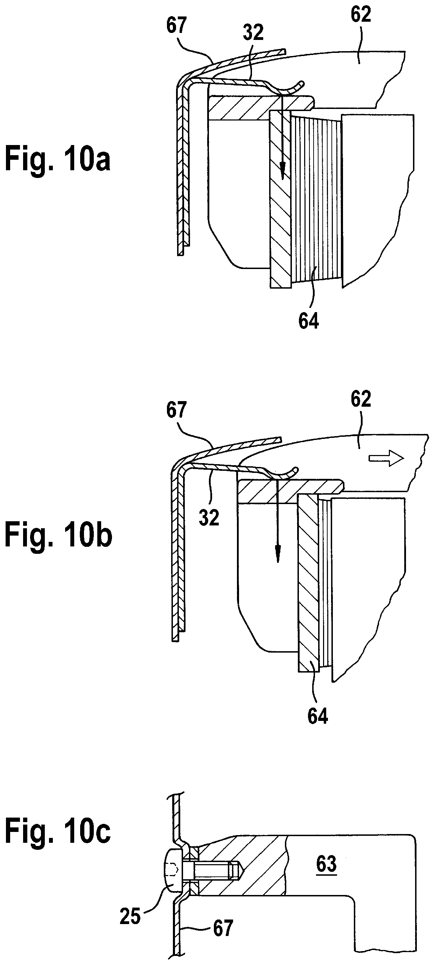

- Fig. 10: a) und b) einen Detailschnitt durch den Bremssattel aus Fig. 5, wobei das Zusammenwirken von Federelement und Bremssattel verdeutlicht ist, und
- Fig. 10: c) die Befestigung der Federanordnung am Halter in einem Detailschnitt zeigt,

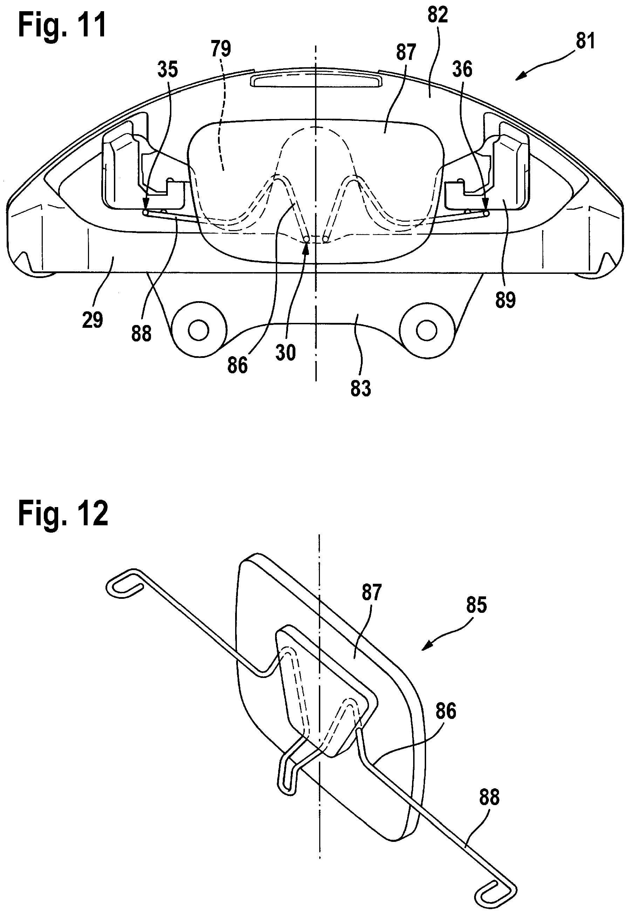

- Fig. 11: eine Scheibenbremse mit einem Rahmensattel und einer Federanordnung in einer weiteren Ausführungsform, und
- Fig. 12: eine perspektivische Ansicht der Federanordnung aus Fig. 11.

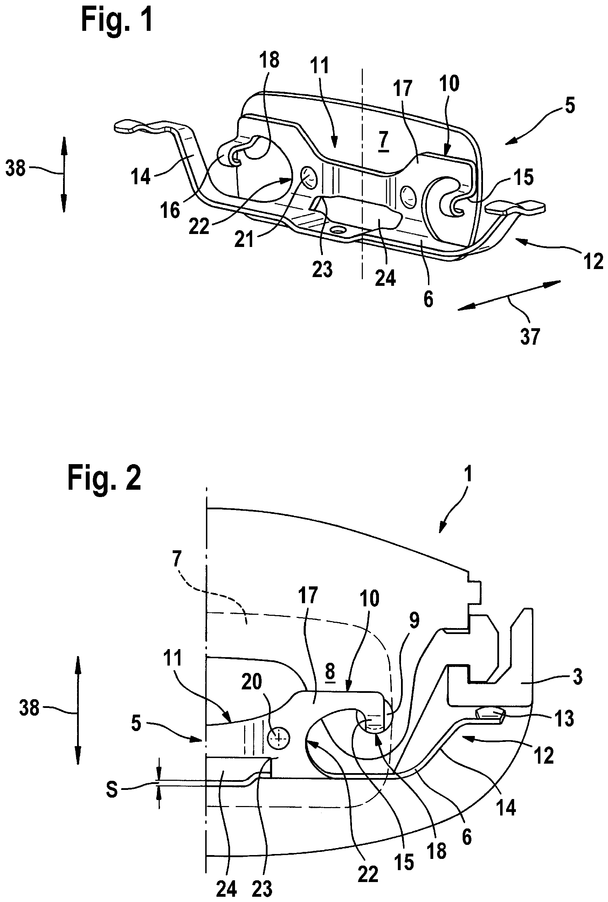

Die Fig. 1 bis 4 zeigen eine erste prinzipielle Ausführungsform einer Federanordnung 5,45,55 mit einer Sattelblende 7,47,57, wobei Fig. 1 eine einzelne Federanordnung 5, und Fig. 2 bis Fig. 4 die Federanordnung 5,45,55 im verbauten Zustand in verschiedenen Scheibenbremsen 1,41,51 darstellen. Im Wesentlichen umfasst die Federanordnung 5 zwei Befestigungsabschnitte 10, einen Mittelabschnitt 11 und zwei Federarme 12. Fig. 2 verdeutlicht, dass die Federarme 12 mit je einem balligen Finger 13 gegen einen fahrzeugfesten Halter 3 drücken, wobei je eine Schwinge 14 die Verbindung zum Mittelabschnitt 11 herstellt und im Wesentlichen eine Vorspannung F_{V} aufbringt. Der Mittelabschnitt 11 geht in die Befestigungsabschnitte 10 über, welche je eine Einhängvorrichtung 15 und einen Träger 17 umfassen. Da der Mittelabschnitt 11 und die Befestigungsabschnitte 10 senkrecht zu den Federarmen 12 stehen, ist die elastische Verformung der Federarme 12 um ein Vielfaches höher als die der Befestigungsabschnitte 10 und des Mittelabschnitts 11. Die Befestigungsvorrichtungen 15 durchgreifen Bohrungen 9 in dem fahrzeugfernen Sattelschenkel des Bremssattels 2 und drücken über radiale Auflagefläche 18 den Bremssattel 2 an den Halter 3. Der dabei durch die Bremsbeläge 4 führende Kraftfluss der Vorspannung F_{V}, bewirkt eine Festlegung der Bremsbeläge 4 in einer, sich auf eine Drehachse einer nicht dargestellten Bremsscheibe beziehenden, Radialrichtung 8. Die spezielle Biegung der Befestigungsvorrichtungen 15 bewirkt, dass der Kontakt zwischen Befestigungsvorrichtung 15 und Bremssattel 2 nicht über eine Kante 19 mit der Stärke S der Federanordnung 5, sondern über die größere, leicht ballige Auflagefläche 18 erfolgt. Damit die Federanordnung 5 verliersicher an der Scheibenbremse 1 wirksam ist, weisen die Befestigungsvorrichtungen 15 je einen Haken 16 auf, die im verbauten und vorgespannten Zustand an einer der Bremsscheibe zugewandten Innenseite des Sattelschenkels anliegen, und dadurch ein axiales Abgleiten der Federanordnung 5 verhindern. Im Mittelabschnitt 11 befinden sich zwei Ausnehmungen 20, die, wie in Fig. 1 gezeigt, zur Aufnahme von Verbindungsmitteln 21 der Sattelblende 7 dient. Als Verbindungsmittel 21 sind Nieten oder Schrauben denkbar. Die Sattelblende, wie auch eine Schutzblende für eine Scheibenbremse allgemein, hat den Zweck, Schmutz und andere störenden Einflüsse von der Scheibenbremse fern zu halten. Auch kann die Sattelblende dazu dienen, das Erscheinungsbild der Scheibenbremse zu vereinheitlichen und den optischen Gesamteindruck zu harmonisieren, indem einzelne Bauteile überdeckt werden. Neben diesem vorteilhaften Doppeleffekt, lässt sich zudem die Schutzblende graphisch und anwendungsorientiert gestalten, beispielsweise mit einem Namen oder einer Typenbezeichnung. Die Schutzblende ist dabei so ausgeführt, dass sie einen wesentlichen Teil des Bremssattels überdeckt, das heißt, dass sie eine definierte Oberfläche auf der dem Fahrzeug abgewandten Seite der Scheibenbremse bildet. Dabei kann sie entweder nur den Bremssattel, oder die gesamte Scheibenbremse überdecken. Es stellt sich als vorteilhaft dar, dass die Sattelblende einfach austauschbar ist, und somit die Scheibenbremse auf einfachem Wege optisch aufgewertet werden kann.

In Fig. 2 wird der positive Effekt der Ausnehmungen 20 im Mittelabschnitt 11 nachvollziehbar. Die Vorspannkraft F_{V}, welche zwischen dem Halter 3 und dem Bremssattel 2 wirksam ist, fließt von den Fingern 13 über die Schwingen 14 durch den Mittelabschnitt 11 über die Träger 17 in die Befestigungsvorrichtungen 15. Um diesen Kraftfluss harmonisch und gleichmäßig zu gestalten und um Spannungsspitzen zu vermeiden, ist der Übergang 22 zwischen Schwingen 14, Mittelabschnitt 11 und Befestigungsvorrichtungen 15 abgerundet. Diese geometrische Ausbildung bewirkt, dass sich die Spannungen gleichmäßig im Randbereich des Übergangs 22 konzentrieren. Die Ausnehmungen 20 im Mittelabschnitt x bewirken zudem, dass der Kraftfluss von den Ecken 23 der Ausnehmung 24 weggeleitet wird.

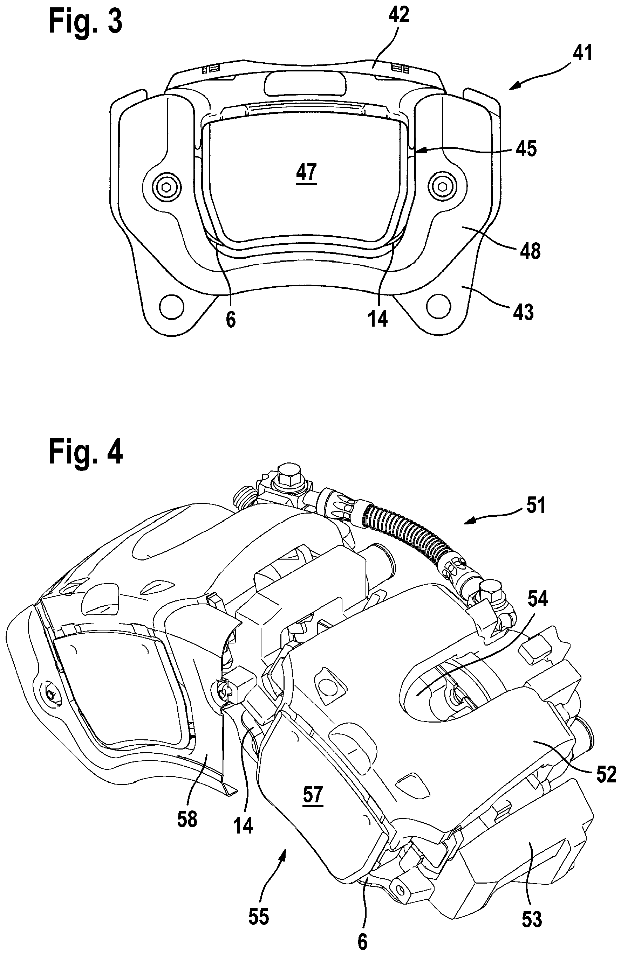

Die Scheibenbremse in Fig. 3 ist im Bezug auf die Federanordnung 45 prinzipiell nach Fig. 2 aufgebaut. Zusätzlich zu der Sattelblende 47 für den Bremssattel 42 ist bei dieser Ausführungsform eine Halterblende 48 vorgesehen, die geometrisch auf die Sattelblende 47 abgestimmt ist. Durch das Zusammenspiel von Halterblende 48 und Sattelblende 47 verfügt die Scheibenbremse 41 auf der dem Fahrzeug abgewandten Seite eine vollständige Schutzabdeckung. Dies kann jedoch auch mittels einer speziell gestalteten Halterblende erreicht werden, indem diese vollständig über die Scheibenbremse 41 ausgedehnt ist, und somit eine eigene Schutzblende für den Bremssattel 42 überflüssig ist. Die Halterblende 48 und/oder die Schutzblende 47 können aus einem metallischen Werkstoff oder aus Kunststoff hergestellt sein, welcher sich hierbei als besonders korrosionsbeständig erweist. Dies kann auch durch eine geeignete Beschichtung oder Lackierung der Schutzblende und/oder der Halterblende realisiert werden.

Die in Fig. 4 dargestellte Scheibenbremse 51 umfasst zur Erhöhung der Bremsleistung je zwei Bremssättel 52 und zwei Paar Bremsbeläge 54. Diese sind auf einem gemeinsamen fahrzeugfesten Halter 53 verschiebbar gelagert. Analog zu der in Fig. 3 gezeigten Scheibenbremse 41 sind hierbei je Bremssattel 52 eine Sattelblende 57 und eine gemeinsame Halterblende 58 verbaut. Die Halterblende 58 erstreckt sich über den gesamten Halter 53 und umgreift die Sattelblende 57, so dass die gesamte Fahrzeug abgewandte Fläche der Scheibenbremse 51 geschützt und optisch harmonisiert ist.

Zu den Fig. 2 bis 4 sei angemerkt, dass die geometrische Konzeption hinsichtlich der Anordnung der Federanordnungen 5,45,55 in an der jeweiligen Scheibenbremse 1,41,51, insbesondere bezüglich der Kontaktpunkte der Federanordnung 5,45,55 zu den Bremsenbauteilen, auch in alternativer Weise ausgeführt sein kann. Beispielsweise kann eine Federanordnung derart ausgeprägt sein, dass die Vorspannung nicht durch Zug, sondern durch Druck realisiert wird.

In den Fig. 5 bis 10 ist eine erfindungsgemäße Ausführungsform mit verschiedenen Gestaltungsvarianten einer Federanordnung 65,75 mit einem Federelement 46,56,66,76 und einer Sattelblende 76,77 beschrieben. Der prinzipielle Aufbau der Federanordnungen 65,75 ist dabei derart gewählt, dass die Federanordnungen 65,75 am Halter 63 fixiert sind, und das Federelement 46,56,66,76 mit einem Federarm 32,33 Vorspannung F_{V} gegenüber dem Bremssattel 62 aufbaut. Fig. 5. zeigt eine solche Federanordnung 65,75 im verbauten Zustand an einer Scheibenbremse 61 mit einem Bremssattel 62, der als Rahmensattel ausgeführt ist. Aus Fig. 6 wird deutlich, auf welche Weise die Federanordnung 65 aus Federelement 46 und Sattelblende 67 aufgebaut ist, die mit gemeinsamen Befestigungsmitteln 25 an dem Rahmensattel befestigt sind. Da die Befestigungspunkte am Halter 63 während eines Bremsvorgangs eine unterschiedliche elastische Verformung erleiden können, sind auf dem Federelement 46 Ausgleichsmittel 26 vorgesehen (Fig. 7). Ob der gemeinsamen Fixierung der Sattelblende 67 und des Federelements 46 am Halter 63, sind auch an der Sattelblende 67 Ausgleichsmittel vorhanden, welche die unterschiedliche Verformung des Halters 63 kompensieren. In einer weitern Ausgestaltung ist das Federelement 56 der Federanordnung 65 mehrstückig aus einem Federstück 34, gefertigt aus Federstahl, und aus einem Trägerblech 27 aufgebaut (Fig. 8). Beide Bauteile können miteinander vernietet oder formschlüssig verbunden sein. Wie in Fig. 9a bis 9c gezeigt, kann auf das Trägerblech vollständig verzichtet werden, indem die Sattelblende 77 dessen Funktion einnimmt. Das verbleibende Federelement 66,67 ist dabei mit einer Befestigungsvorrichtung 28 an der Sattelblende 77 angebracht, und kann sowohl aus Blech (Fig. 9b) oder aus Federdraht (Fig. 9c) hergestellt sein.

Die in den Fig. 5 bis 9 angeführten Varianten einer Federanordnung sind diese fest mit dem Halter 63 (Fig. 10c) verbunden, und erzeugen mittels des Federarms 32 des Federelements 46,56,66,76 eine Vorspannung F_{V} gegenüber dem Bremssattel 62. Da der Federarm 32 auf dem Bremssattel 62 aufliegt, verschiebt sich je nach Verschleißzustand des Bremsbelags 64 der Auflagepunkt 30 von Federarm 32 und Bremssattel 62 (Fig. 10a,b).

Eine zusätzliche Ausführungsform einer Federanordnung 85 ist in den Fig. 11 und 12 dargestellt. Diese setzt sich aus einem Federelement 86 aus Draht und einer Sattelblende 87 aus Kunststoff zusammen. Das vorliegende Beispiel beschreibt eine Variante für eine Scheibenbremse 81 mit einem als Rahmensattel ausgeführten Bremssattel 82. Die Vorspannung F_{V} wird im Wesentlichen von den Federarmen 88 zwischen den Halterarmen 89 des Halters 83 und dem Rahmen 29 des Rahmensattels aufgebracht. Das Federelement 86 ist dabei derart gebogen, dass sich geeignete Auflagepunkte 30,35,36 herausbilden, und ein Abschnitt 31 der Federanordnung 85 von dem Werkstoff der Sattelblende 87 umschlossen ist. Dieser Abschnitt 31 wird durch die Kunststoffummantelung versteift. Vorzugsweise ist die Sattelblende 87 an dem Federelement 86 angegossen. Auch denkbar sind lösbare Verbindungsmethoden, wie zum Beispiel ein Anklipp-Mechanismus. Statt des Drahts kann das Federelement 86 wie in den voran gestellten Ausführungsbeispielen aus einem Blech geformt sein.

**Bezugszeichenliste**

| | | | |
|---|---|---|---|
| 1 | Scheibenbremse | 33 | Federarm |
| 2 | Bremssattel | 34 | Federstück |
| 3 | Halter | 35 | Auflagepunkt |
| 4 | Bremsbelag | 36 | Auflagepunkt |
| 5 | Federanordnung | 37 | Axialrichtung |
| 6 | Federelement | 38 | Radialrichtung |
| 7 | Sattelblende | 41 | Scheibenbremse |
| 8 | Gehäusefinger | 42 | Bremssattel |
| 9 | Bohrung | 43 | Halter |
| 10 | Befestigungsabschnitt | 45 | Federanordnung |
| 11 | Mittelabschnitt | 46 | Federelement |
| 12 | Federarm | 47 | Sattelblende |
| 13 | Finger | 48 | Halterblende |
| 14 | Schwinge | 51 | Scheibenbremse |
| 15 | Befestigungsvorrichtung | 52 | Bremssattel |
| 16 | Haken | 53 | Halter |
| 17 | Träger | 54 | Bremsbelag |
| 18 | Auflagefläche | 55 | Federanordnung |
| 19 | Kante | 56 | Federelement |
| 20 | Ausnehmung | 57 | Sattelblende |
| 21 | Verbindungsmittel | 58 | Halterblende |
| 22 | Übergang | 61 | Scheibenbremse |
| 23 | Ecke | 62 | Bremssattel |
| 24 | Ausnehmung | 63 | Halter |
| 25 | Befestigungsmittel | 64 | Bremsbelag |
| 26 | Ausgleichsmittel | 65 | Federanordnung |
| 27 | Trägerblech | 66 | Federelement |
| 28 | Befestigungsvorrichtung | 67 | Sattelblende |
| 29 | Rahmen | 75 | Federanordnung |
| 30 | Auflagepunkt | 76 | Federelement |
| 31 | Abschnitt | 77 | Sattelblende |
| 32 | Federarm | 79 | Gehäusefinger |
| 81 | Scheibenbremse | 88 | Federarm |
| 82 | Bremssattel | 89 | Halterarm |
| 83 | Halter | | |
| 85 | Federanordnung | | |
| 86 | Federelement | | |
| 87 | Sattelblende | | |
| | | | |
| Fv | Vorspannung | | |
| S | Stärke S | | |

## Patentansprüche

1. Scheibenbremse
- mit Schutzblende, mit einem fahrzeugfesten Halter, an dem Bremsbeläge und mindestens ein Bremssattel in einer Axialrichtung verschiebbar gelagert sind,
- wobei der Halter und der Bremssattel mindestens eine Bremsscheibe umgreifen,
- und wobei der Bremssattel einen Gehäuseschenkel mit mindestens einer Betätigungsvorrichtung, einen weiteren Gehäuseschenkel mit mindestens einem Gehäusefinger, und eine Gehäusebrücke aufweist,
- mit einer Federanordnung, die eine elastische Vorspannung zwischen Bremssattel und Halter derart erzeugt,
- dass die Vorspannung im Wesentlichen senkrecht zu einer Verschiebungsrichtung des Bremssattels ausgerichtet ist,
- dass die Federanordnung ein Federelement und die Schutzblende umfasst, und
- dass der Gehäusefinger, das Federelement und die Schutzblende derart axial zueinander angeordnet sind, dass das Federelement zwischen Gehäusefinger und Schutzblende positioniert ist, wobei
die Schutzblende den Bremssattel und die Federanordnung abdeckt,
**dadurch gekennzeichnet, dass** das Federelement (66,76) an der Schutzblende (77) derart angebracht ist, dass der Kraftfluss der Vorspannung (F_{V}) durch die Schutzblende (77) führt.

2. Scheibenbremse nach Anspruch 1, **dadurch gekennzeichnet, dass** die Schutzblende (7,47,57,67,77,87) den Gehäusefinger (9,79) des Bremssattels (2,42,52,62,82) überdeckt.

3. Scheibenbremse nach einem oder mehreren der voran gestellten Ansprüche, **dadurch gekennzeichnet, dass** die Federanordnung (5,45,55,85) mittels einer Befestigungsvorrichtung (15) am Bremssattel (2,42,52,82) fixiert ist.

4. Scheibenbremse nach einem oder mehreren der voran gestellten Ansprüche, **dadurch gekennzeichnet, dass** die Federanordnung (65,75) mit Befestigungsmitteln (25) am Halter (63) festgelegt ist.

5. Scheibenbremse nach einem oder mehreren der voran gestellten Ansprüche, **dadurch gekennzeichnet, dass** das Federelement (56) mehrstückig aus einem Federstück (34) und einem Trägerelement (27) gebildet ist.

6. Scheibenbremse nach einem oder mehreren der voran gestellten Ansprüche, **dadurch gekennzeichnet, dass** eine Schutzblende (48,58) vorgesehen ist, die fest mit dem Halter (43,53) verbunden ist.

7. Scheibenbremse nach Anspruch 2 und 6, **dadurch gekennzeichnet, dass** die Schutzblende (48,58) im Zusammenwirken mit der Schutzblende (47,57) als mehrstückige Schutzblende dient und einen wesentlichen Teil der Scheibenbremse (41,51) überdeckt.

8. Scheibenbremse nach einem oder mehreren der voran gestellten Ansprüche, **dadurch gekennzeichnet, dass** die Schutzblende aus Kunststoff hergestellt ist.

9. Scheibenbremse nach Anspruch 8, **dadurch gekennzeichnet, dass** das Federelement (86) der Federanordnung (85) zumindest teilweise im Werkstoff der Sattelblende (87) angeordnet ist.

10. Scheibenbremse nach Anspruch 9, **dadurch gekennzeichnet, dass** das Federelement (86) und die Schutzblende (87) mittels eines formschlüssigen und lösbaren Mechanismus verbunden sind.

## Claims

1. Disk brake
- having a protective panel, having a bracket which is fixed with respect to the vehicle and on which brake linings and at least one brake caliper are mounted so as to be movable in an axial direction,
- with the bracket and the brake caliper engaging around at least one brake disk,
- and with the brake caliper having a housing limb with at least one actuating device, a further housing limb with at least one housing finger, and a housing bridge,
- having a spring arrangement which generates an elastic preload between the brake caliper and the bracket, in such a way
- that the preload is aligned substantially perpendicular to a movement direction of the brake caliper,
- that the spring arrangement comprises a spring element and the protective panel, and
- that the housing finger, the spring element and the protective panel are arranged axially with respect to one another in such a way that the spring element is positioned between the housing finger and the protective panel, with the protective panel covering the brake caliper and the spring arrangement,
**characterized in that** the spring element (66,76) is attached to the protective panel (77) in such a way that the force flow of the preload (F_{V}) runs through the protective panel (77).

2. Disk brake according to Claim 1, **characterized in that** the protective panel (7,47,57,67,77,87) covers the housing finger (9,79) of the brake caliper (2,42,52,62,82).

3. Disk brake according to one or more of the preceding claims, **characterized in that** the spring arrangement (5,45,55,85) is fixed to the brake caliper (2,42,52,82) by means of a fastening device (15).

4. Disk brake according to one or more of the preceding claims, **characterized in that** the spring arrangement (65,75) is fixed to the bracket (63) by fastening means (25).

5. Disk brake according to one or more of the preceding claims, **characterized in that** the spring element (56) is formed in multiple parts from a spring piece (34) and a support element (27).

6. Disk brake according to one or more of the preceding claims, **characterized in that** a protective panel (48,58) is provided which is fixedly connected to the bracket (43,53).

7. Disk brake according to Claim 2 and 6, **characterized in that** the protective panel (48,58) serves, in interaction with the protective panel (47,57), as a multi-part protective panel, and covers a significant part of the disk brake (41, 51) .

8. Disk brake according to one or more of the preceding claims, **characterized in that** the protective panel is produced from plastic.

9. Disk brake according to Claim 8, **characterized in that** the spring element (86) of the spring arrangement (85) is arranged at least partially in the material of the caliper panel (87).

10. Disk brake according to Claim 9, **characterized in that** the spring element (86) and the caliper panel (87) are connected by means of a form-fitting and detachable mechanism.

## Revendications

1. Frein à disque comprenant
- un capot de protection, un support qui est fixé au véhicule et sur lequel des garnitures de frein et au moins un étrier de frein sont montés de manière coulissante dans une direction axiale,
- le support et l'étrier de frein enserrant au moins un disque de frein,
- et l'étrier de frein comportant une branche de boîtier pourvue d'au moins un dispositif d'actionnement, une autre branche de boîtier pourvue d'au moins un doigt de boîtier et un pont de boîtier,
- un ensemble à ressort qui génère une précontrainte élastique entre l'étrier de frein et le support,
- la précontrainte étant orientée sensiblement perpendiculairement à une direction de coulissement de l'étrier de frein,
- l'ensemble à ressort comprenant un élément à ressort et l'écran de protection, et
- le doigt de boîtier, l'élément à ressort et l'écran de protection étant disposés axialement l'un par rapport à l'autre de sorte que l'élément à ressort soit positionné entre le doigt de boîtier et l'écran de protection, l'écran de protection recouvrant l'étrier de frein et l'ensemble à ressort,
**caractérisé en ce que** l'élément à ressort (66, 76) est monté sur l'écran de protection (77) de telle manière que le flux de force de la précontrainte (Fv) passe à travers l'écran de protection (77).

2. Frein à disque selon la revendication 1, **caractérisé en ce que** l'écran de protection (7, 47, 57, 67, 77, 87) recouvre le doigt de boîtier (9, 79) de l'étrier de frein (2, 42, 52, 62, 82).

3. Frein à disque selon l'une au moins des revendications précédentes, **caractérisé en ce que** l'ensemble à ressort (5, 45, 55, 85) est fixé à l'étrier de frein (2, 42, 52, 82) au moyen d'un dispositif de fixation (15).

4. Frein à disque selon l'une au moins des revendications précédentes, **caractérisé en ce que** l'ensemble à ressort (65, 75) est fixé au support (63) à l'aide de moyens de fixation (25).

5. Frein à disque selon l'une au moins des revendications précédentes, **caractérisé en ce que** l'élément à ressort (56) est formé en plusieurs pièces à partir d'une pièce à ressort (34) et d'un élément porteur (27).

6. Frein à disque selon l'une au moins des revendications précédentes, **caractérisé en ce qu'**un écran de protection (48, 58) est prévu qui est relié de manière fixe au support (43, 53).

7. Frein à disque selon les revendications 2 et 6, **caractérisé en ce que** l'écran de protection (48, 58), en coopération avec le l'écran de protection (47, 57), sert d'écran de protection en plusieurs pièces et recouvre une partie substantielle du frein à disque (41, 51).

8. Frein à disque selon l'une au moins des revendications précédentes, **caractérisé en ce que** l'écran de protection est en matière synthétique.

9. Frein à disque selon la revendication 8, **caractérisé en ce que** l'élément à ressort (86) de l'ensemble à ressort (85) est au moins partiellement disposé dans le matériau de l'écran d'étrier (87).

10. Frein à disque selon la revendication 9, **caractérisé en ce que** l'élément à ressort (86) et l'écran de protection (87) sont reliés au moyen d'un mécanisme à complémentarité de formes amovible.
